# EUROPEAN PATENT APPLICATION

(11) **EP 4 614 049 A1**
(43) Date of publication of application: **10.09.2025**
(21) Application number: 24161978.2
(22) Date of filing: 07.03.2024
(51) Int. Cl.: F16L 37/098

(54) **PROBE CONNECTOR CONNECTABLE TO A HOSE BARB, USE, OPENING STRUCTURE, CONNECTION SYSTEM AND METHOD**

(71) Applicant: Sartorius Stedim Biotech GmbH, 37079 Göttingen (DE)
(72) Inventor: PREDIGER, Andreas, 37079 Göttingen (DE); SCHENKE, Tim, 37079 Göttingen (DE)
(74) Representative: Michalski Hüttermann & Partner Patentanwälte mbB

(57) **Abstract**

The invention relates to a probe connector (2) connectable to a hose barb (100) of a bioreactor container (110) for guiding a probe through the probe connector (2) and the hose barb (100) into the bioreactor container (110), including
a base structure (10) having a probe channel (12) and at least one engagement member (14) configured to grip the hose barb (100),
an opening structure (20) comprising at least one leg (26) configured to be moved by a user and engaging with the at least one engagement member (14) for bending thereof in a radial direction (6).

## Description

The invention relates to a probe connector connectable to a hose barb for guiding a probe through the probe connector into the hose barb. The invention further relates to a use, to an opening structure, to a connection system, and to a method.

In chemical, pharmaceutical, biotechnological and/or life science industries, media, e.g. fluid, is typically handled using containers with a hose barb, through which hose barb a probe is meant to be inserted. Hose barbs may be used in practice, e.g. to get access to media contained in the container in order to examine the media and/or in order to process the media. Particularly, probe connectors may need to be connected/attached to or disconnected/detached from a hose barb regularly.

It is an object to provide solutions which enable a more secure and an easier handling of probe connectors. Particularly, a more failure-proof handling is desired when connecting or disconnecting a probe connector to a hose barb. Particularly it is an object to avoid or reduce disadvantages of known solutions.

The object of the invention is solved by the features of the independent claims. Preferred implementations are detailed in the dependent claims.

Thus, the object is particularly solved by a probe connector connectable to a hose barb of a bioreactor container for guiding a probe through the probe connector and the hose barb into the bioreactor container. According to the suggested solution, the probe connector includes
a base structure having a probe channel and at least one engagement member configured to grip the hose barb, and
an opening structure comprising at least one leg configured to be moved by a user and engaging with the at least one engagement member for bending and/or deforming thereof in a radial direction.

In other words, to give an example, the invention provides a connector that is meant to be connected to a hose fitting or hose nipple of a container or bag. Through the connector, a probe can be guided into the hose fitting/nipple to reach the container/bag, for example in order to measure temperature or other parameters therein. The connector has a base member with a channel meant for guiding the probe and has one or more engaging elements, for example with a snap-fit, snap arm or engagement hook, which one or more engaging elements can engage with the hose fitting/nipple. Thus, the connector can be pushed onto the hose fitting/nipple and engaged thereon. The connector furthermore has an opening member or opening tool (i.e. "opening structure"), optionally formed with the base member or attached thereto. The opening member has one or more movable levers for user input (pushing, actuating, pressing or the like) which is/are coupled to the one or more engaging elements. The opening members can deform or bend the one or more engaging elements when receiving the user input. Thus, based on user input to the one or more movable levers (i.e. "at least one leg"), the engagement with the hose fitting/nipple (i.e. "hose barb") can be released or as well established easily.

The invention realizes a process-safe and user-friendly way of connection and/or disconnection of the probe connector. The probe connector can be disengaged from a hose barb or brought into a position for engagement with a hose barb easily especially by means of the opening structure. The invention provides a possibility for mechanical automatism. The invention also provides that less waste is produced in that damage to the engagement member(s) is less likely. The probe connector may be used more often, which can also reduce cost.

For example, assembly and disassembly time may be reduced and shorter set-up times can be achieved. A minimization of errors and risk is possible due to the invention. There is an increased process reliability and hygiene especially considering the use with a bioreactor container, e.g. in a biopharmaceutical environment. Ergonomics are enhanced. There is reduced need of an additional tool for (dis)connection/assembly. The (dis)connection is easy to teach to users.

The technical effects and advantages named herein may further enhance based on implementation of preferred embodiments as described herein.

A probe or test probe relates to a physical device which is regularly used for measurement of physical properties, e.g. of a fluid or liquid. For example, the probe can be configured for temperature measurement. The probe may comprise an especially elongated section with a region, particularly tip, configured for temperature measurement, and for example with a cable and/or connector to be connected to or coupled with measurement equipment. The probe, especially the elongated section or tip, may be inserted into and/or pushed through the probe channel to enter the region of interest, e.g. the hose barb, particularly the inside of the bioreactor container.

A hose barb, hose fitting or hose nipple may provide a port or access to a container. The hose barb particularly has a substantially cylindrical piece or part configured for attachment of a hose or other hollow, substantially round, elements. The hose barb may comprise at least one barb-like ring or protrusion facing in a radially outward direction, e.g. to allow for a push-on connection of hoses/elements, like flexible-plastic or rubber tubing, connectors or the like, which connection may provide sealing and/or securing of the attached component. The hose barb may have a flange configured for attachment to a container. The flange may comprise a flat and/or ring shape. The hose barb may be attached to a container, e.g. screwed to the container and/or glued to the container. The hose barb may comprise or consist of a polymer compound. The hose barb may comprise or consist of a metal alloy.

A (bioreactor) container is understood as a component providing a volume for a fluid, especially a gas and/or liquid. The container may be at least sectionally and/or partially flexible, solid/rigid or both. The container may be a bag or a solid structure, e.g. a solid vessel. The container may be configured for mixing of a fluid, e.g. configured as a mixing bag or mixing container. The container may comprise and/or may be configured to comprise the hose barb. The hose barb may be attached to the container, e.g. at an opening of the container. The container is in particular a bioreactor container, i.e. suitable for handling a bioprocess, pharmaceutical process or the like especially in terms of hygiene.

The base structure may be understood as a component of the connector, probe channel, engagement member, configured to grip the hose barb. The base structure may comprise or consist of a single part, especially formed monolithically, e.g. from a/the polymer compound. The base structure may comprise on one side a back end, e.g. which is round and/or flat, e.g. which includes an end of the probe channel. The base structure may comprise on another side, e.g. opposite the one side, the at least one engagement member and/or the other end of the probe channel. The base structure may have a substantially cylindrical main section particularly including the probe channel especially in its center. The at least one engagement member may extend from the main section and/or substantially in parallel to the probe channel.

The opening structure may be understood as a tool for a probe connector or as a structural part of a probe connector. The opening structure may have the main function to move the at least one engagement member away from its position that it assumes for gripping the hose barb, i.e. may open or unlock the at least one engagement member. The opening structure may be configured to actuate the base structure or its engagement member, especially based on user input, in particular manual user input like a pushing force or the like. The at least one leg may be understood as a lever, an arm or the like. The at least one leg may be configured for moving, e.g. swiveling or pivoting, to work in the sense of pliers. The user may provide force, e.g. apply a force or pressure to or might pull on the at least one leg to provide the movement of said leg. The at least one leg in particular engages with and/or grips the at least one engagement member for substantially synchronous movement of both and/or to bend the at least one engagement member for example when the at least one leg is moved.

The at least one leg engaging with the engagement member particularly and substantially relates to a form fit acting between said led and said engagement member. The form fit may be effective along at least one direction, typically in a/the radial direction e.g. with respect to the extension of the channel.

Bending the engagement member in a radial direction particularly and substantially relates to one section or end of the at least one engagement member being fixed and another section or end of said engagement member being moved which a section in between bends, deforms and/or flexes. For example, the front end of said engagement member may be moved radially thereby bending the rest of said engagement member in a curve.

The at least one leg may be movable relative to the base structure. The at least one leg may be movably coupled (e.g. directly or indirectly) to the base structure, e.g. coupled to the base structure and movable relative to base structure, especially including at least one degree of freedom, especially along one or more certain directions and/or about a certain axis. The at least one leg may be pivotable relative to the base structure, e.g. pivotably coupled to the base structure and/or pivotably held on the base structure. For example, a hinge, a pivoting axis or a flexible section may provide the ability for movement of the at least one leg relative to the base structure. Alternatively, or additionally, in particular, the at least one leg may be movable/pivotable relative to an opening structure ring attached to the base structure, e.g. coupled to the opening structure ring, especially movably/pivotably coupled. For example, the at least one leg may be coupled directly to the base structure (e.g. not including the opening structure ring) or directly to the opening structure ring (and thus indirectly to the base structure). The opening structure ring may as well be part of the opening structure and/or attached thereto or formed therewith. The opening structure ring may be configured to surround and/or surround the probe channel.

The at least one leg may be configured as a rigid and/or inflexible part. The at least one leg may have an engagement section configured to grab the engagement member. The at least one leg may have an input section to be pushed be a user. The input section may be arranged away from and/or opposite to the engagement section. The at least one leg may have a pivoting section. The pivoting section may be arranged between the engagement section and the input section, e.g. substantially in the middle. The input section may be arranged at an angle relative to the engagement section, e.g. to form an obtuse angle and/or an angle in the range above 90° and below 180°; this facilitates a compact construction and thus enhanced safety and usability. The pivoting section may be coupled pivotably to the base structure and/or to the opening structure ring. The input section, the engagement section and/or the pivoting section may comprise a substantially convex and/or round outer surface. The input section, the engagement section and the pivoting section may be formed in a single part, especially as the rigid and/or inflexible part. The input section may comprise a protrusion and/or a recess, or a plurality thereof, facing an outside for enhanced user grip. The engagement section may comprise a hook or a projection to grip the at least one engagement member, especially at an end thereof.

The at least one leg may be coupled pivotably and/or via a/the hinge and/or flexible section, to the base structure and/or the opening structure ring, especially for pivoting substantially around a pivoting axis. The pivoting axis may be arranged slant, oblique or transverse and/or perpendicular to a connection direction of the probe connector and/or to the extension of the probe channel. The pivoting axis may be arranged adjacent to and/or at a distance to the probe channel in the radial direction. The ability for pivoting, especially the pivoting axis, provides an easy usability, especially in that the movement of the at least one leg may be either away from or towards the base structure. It also provides an easy recognition of the position of the at least one leg to prevent a faulty operation.

The at least one leg may be configured to be clipped to the base structure and/or the opening structure ring especially by means of a clip connection, in particular two or more clip connections. The clip connection(s) may be removable or reversible in order to detach the at least one leg. For example, the clip connection may be formed from a shaft and two opposite, sectionally circumferential grips configured to grip around the shaft and/or forming a receptacle for the shaft. The shaft may be fixed on the base structure or on the opening structure ring and the two grips on the at least one leg, or vice versa. There may be two clip connections per leg for getting a safer connection.

The at least one leg may be removably attached to the base structure and/or the opening structure especially by means of a connection involving a separate shaft. The shaft connection may be formed from a shaft that penetrates both parts along a/the pivoting axis and through bores and/or receptacles thereby forming movable coupling. The separate shaft may comprise or consist of metal.

The opening structure ring and the at least one leg may be formed as one piece and/or connected monolithically. For example, a hinge and/or flexible section may be formed between the opening structure ring and the at least one leg, especially as a flexible, bendable or deformable material section. This could be realized by plastic injection molding.

The opening structure ring may have an aperture. The aperture may be configured for receiving the base structure. The aperture may be configured for forming and/or form a circumferential contact area with the base structure. The circumferential contact area may comprise a substantially and/or sectionally cylindrical form. The circumferential contact area may support in centering the opening structure ring on the base structure. The circumferential contact area may provide a pressure fit between structure and ring which holds the ring in a safe position. The aperture may be configured for forming and/or form an axial contact area with the base structure. The axial contact area may comprise a substantially and/or sectionally of flat form, ring form and/or conical/tapered form. The axial contact area may support in positioning the opening structure ring on the base structure in the connection direction and/or in an axial direction, e.g. along the probe channel. Thus, the at least one leg may be positioned in a determined manner relative to the engagement member for engagement therewith. The aperture may be formed at least in part from the circumferential and the axial contact areas. The aperture preferably is larger in diameter than the probe channel. The opening structure ring may be substantially ring-shaped and/or comprise a ring-form. The aperture may be formed substantially in the middle of the opening structure ring to contribute to or provide the ring-shape / ring-form.

The base structure may comprise or consist of a polymer compound, especially polyoxymethylene, short for POM. The opening structure may comprise or consist of a polymer compound. The base structure and the opening structure may comprise or consist of the same polymer compound or different polymer compounds. For example, the base structure may at least partially comprise or consist of a first polymer compound and the opening structure may at least partially comprise or consist of a second polymer compound that is different to the first polymer compound in at least a fraction of a chemical component and/or in a mechanical property, e.g. hardness, density, modulus of elasticity of elongation at break. The first and/or second polymer compound may be different in the Shore A hardness or Shore D hardness according to DIN ISO 7619-1 (e.g. 2012-02) or DIN ISO 48-4 (e.g. 2021-02), modulus of elasticity according to DIN 53457 (e.g. 1987-10), density according to DIN 53479 (e.g. 1976-07), heat deflection temperature HDT-A according to DIN 53461 (e.g. 1987-1) or DIN EN ISO 75-2 (e.g. 2004-09), elongation at break according to DIN 53455 (e.g. 1981-08) and/or tensile strength according to DIN 53455 (e.g. 1981-08), particularly by at least 5 % or 10 %. Such a difference preferably is at least 5 %, more preferably at least 10 %, particularly at least 20 %.

The at least one engagement member may have a sliding surface. The sliding surface is preferably configured for sliding on the hose barb to deflect the at least one engagement member in the radial direction, especially when connecting the probe connector to the hose barb. The sliding surface may face in a radial inner direction. The sliding surface may comprise a substantially concave and/or sectionally circumferential or ring-shaped form, particularly corresponding to an outer contour and/or an at least sectionally circumferential protrusion of the hose barb. The at least one engagement member may have a retention surface. The retention surface may face towards the probe channel and/or away from a connected bioreactor container with the hose barb. The retention surface is particularly configured to stop behind an/the at least sectionally circumferential protrusion of the hose barb, especially when the probe connector is connected to the hose barb. The retention surface may comprise a substantially flat and/or sectionally circumferential or ring-shaped form. The at least one engagement member may taper towards its front end and/or may comprise a tip that tapers towards its end, especially by means of the sliding surface. In a section, especially at the tip or front end, the at least one engagement member may have a V-shape.

The at least one leg, particularly the engagement section, may comprise a/the hook or projection. The at least one leg, especially the hook or projection, may be configured to grab around a/the front end of the at least one engagement member. The front end may comprise and/or be formed by a section of the sliding surface and/or a radial inner surface of the base structure. The at least one leg, especially the engagement section, in particular the hook, may have first axially extending division, a radially extending division, and a second axially extending division. Said divisions may be formed from one piece and/or monolithically, and may be in a U-shape. The second axially extending division may form a tip and/or may extend towards the pivoting section and/or the input section. The first and the second axially extending division may extend substantially in parallel and/or side by side.

The probe connector or the hose barb may include a gasket, e.g. a sealing ring. The gasket may comprise a polymer compound or rubber. The gasket may be configured for sealing in the transition between the probe channel and the hose barb. The gasket preferably comprises a ring-shape. The gasket is preferably arranged substantially coaxially with the probe channel. The gasket may be attached to the base structure or to the hose barb. The gasket may furthermore provide a tight fit between the probe connector and the hose barb by being compressed during connection.

The term "at least one" or "one or more" or the like expresses that there may be more than one of the particular feature. For example, there may be more than one engagement member included in one base structure and/or more than one leg included in one opening structure. However, even if such a term ("at least one" / "one or more") is not used, the indefinite naming or introduction of a feature (e.g. "an aperture" does not mean there cannot not be more than one of said feature.

The number of engagement members and legs may in each case be more than one, in particular may be two, and particularly may be similar. The base structure may have two of the at least one engagement member. The opening structure may have two of the at least one leg. The engagement members and the legs may substantially be configured similarly. One engagement member may correspond to one leg. Particularly, each of the two (or more) legs may engage with and/or be configured for engaging with one of the two (or more) engagement members. The two engagement members may be arranged on opposite radial sides of the probe channel. The two legs may be arranged and/or configured to be arranged on opposite radial sides of the probe channel, the aperture and/or the opening structure ring. For example, the probe channel pointing along one imaginary line, one leg may be on one side of the imaginary line and the other may be on the other side of the imaginary line. The two legs and/or the two engagement members may at least substantially extend towards the same direction, especially the connection direction.

The object is further solved by a use of the probe connector for connecting and/or disconnecting to a bioreactor container with a hose barb and particularly for guiding and/or assisting in guiding a probe into the bioreactor container, the probe particularly provided for temperature measurement. The invention may be applied in chemical, pharmaceutical, biotechnology and life science industries, particularly with increased hygienic demands.

The object is further solved by an opening structure for a probe connector connectable to a hose barb of a bioreactor container for guiding a probe through the probe connector and the hose barb into the bioreactor container, the probe connector including a base structure having a probe channel and at least one engagement member configured to grip the hose barb. According to the suggested solution, the opening structure comprises
at least one leg configured to be moved by a user and engaging with the at least one engagement member for bending thereof in a radial direction.

The object is further solved by a connection system including a hose barb, optionally a bioreactor container with the hose barb, and the probe connector.

The object is further solved by a method for connecting and/or disconnecting the probe connector to a hose barb, the hose barb especially comprised by a bioreactor container, including
moving the at least one leg in the radial direction at least in an engagement section thereof, wherein the at least one engagement member is bent in the radial direction, and
moving the probe connector towards or away from the hose barb.

The object is further solved by means of a system including a bioreactor machine and the connection system. The bioreactor machine could be an apparatus configured for realizing a process, like a bioprocess, that involves a fluid.

The object is further solved by means of a system including a temperature measurement device with a probe and the connection system.

These and other aspects of the invention will be apparent from and elucidated with reference to the implementations described hereinafter. Whenever 'or' is used in the present disclosure, 'or' may be replaced by 'and/or'.

In the drawings:
Fig. 1 shows a probe connector connected to a hose barb and including a base structure gripping the hose barb and an opening structure engaging with the base structure in a perspective view;
Fig. 2 shows another embodiment of a probe connector connected to a hose barb in a sectional view; and
Fig. 3 shows a third embodiment of a probe connector connected to a hose barb in a sectional view; and
Fig. 4 shows a connection system including a bioreactor container with a hose barb and with a probe connector.

The description contains procedural or methodical aspects upon describing structural features; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

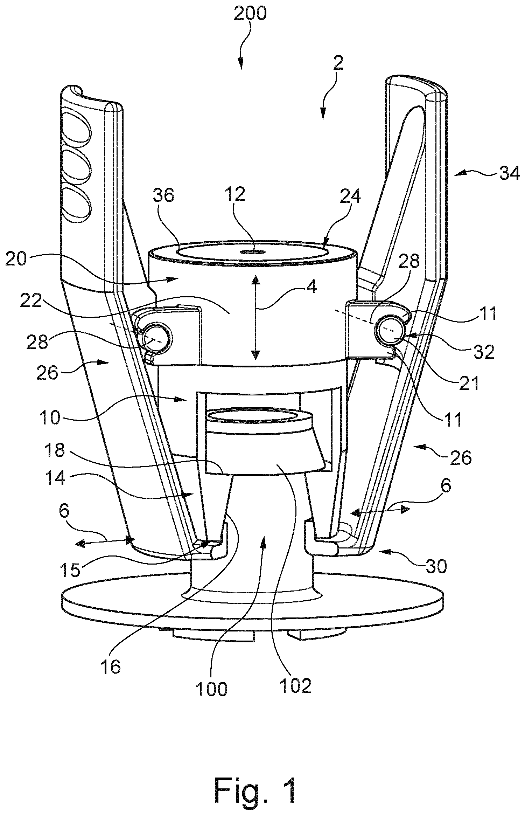

Fig. 1 shows a probe connector 2 connectable, especially connected, to a hose barb 100 of a bioreactor container. The bioreactor container may be a mixing bag of which contents a temperature shall be measured using a probe. The probe connector 2 can be moved relative to the hose barb 100 along a connection direction 4 for connection or disconnection.

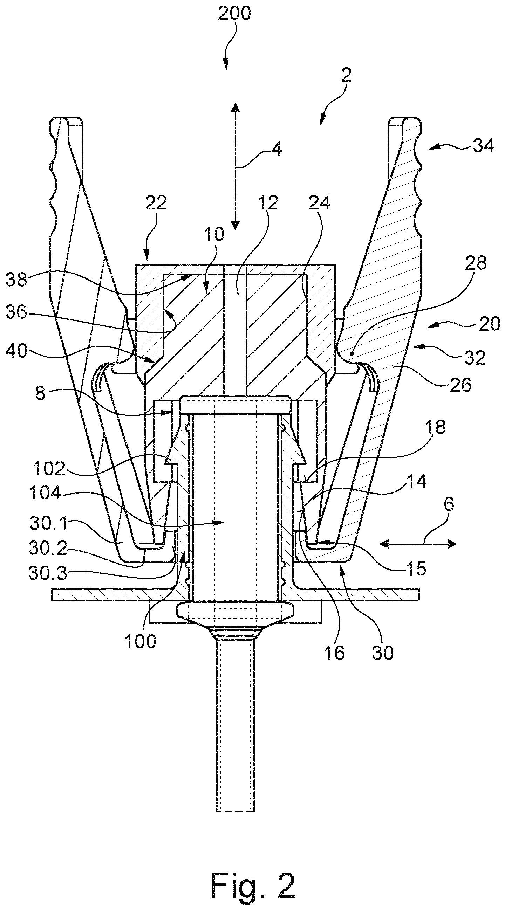

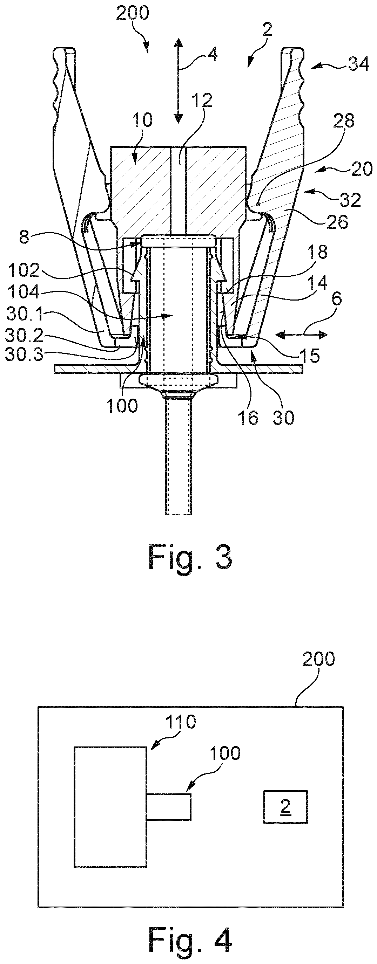

The probe connector 2 is configured for guiding a probe through the probe connector 2 and through the hose barb 100, e.g. into the bioreactor container. The probe connector 2 includes a base structure 10 having a probe channel 12 and two engagement members 14 configured to grip the hose barb 100. The probe channel 12 has a cylindrical shape, for example as seen in Fig. 2 or 3. The engagement members 14 are monolithically formed on the base structure 10 and configured for bending in the radial direction 6. For example, when any of the engagement members 14 is bent in the radial direction 6, the material of the base structure 10, e.g. a polymer compound, being somewhat flexible or bendable automatically provides a counter force to make the engagement member 14 return in the position shown.

The base structure 10 consists of a single part, especially formed monolithically from the polymer compound. The base structure 10 has on one side a back end which is round and flat and includes an end of the probe channel 12. On another side opposite the one side the engagement members 14 and the other end of the probe channel 12 are arranged. The base structure 10 has a substantially cylindrical main section including the probe channel 12 in its center. The engagement members 14 extend from the main section and extend substantially in parallel to the probe channel 12.

The hose barb 100 has a circumferential protrusion 102 which provides a barb or barb-like ring. The circumferential protrusion 102 faces in a radially outward direction to allow for a push-on connection. The hose barb 100 also has a flange configured for attachment to a container, e.g. the bioreactor container. The hose barb 100 consists of a polymer compound.

Particularly, in the arrangement of Fig. 1, the hose barb 100 is gripped by means of both engagement members 14 at its circumferential protrusion 102. The probe connector 2 further includes an opening structure 20 comprising two legs 26 configured to be moved by a user in order to bend the engagement members 14 away from the hose barb 100 and/or in the radial direction 6. Each of the legs 25 engages with one of the engagement members 14 for bending thereof in a radial direction 6. The two legs 26 and the two engagement members 14 are arranged on opposite radial sides of the probe channel 12. The legs 26 are pivotably coupled to the base structure 10, in the case of Fig. 1 to an opening structure ring 22 attached to the base structure 10. The legs 26 can be moved, especially can pivot, tilt or rotate about a respective pivoting axis 28. The legs 26 are configured as rigid, inflexible parts.

Each of the legs 26 has an engagement section 30 configured to grab the engagement member 14, an input section 34 arranged away from the engagement section 30 to be pushed be a user, e.g. in a substantially radial direction, and a pivoting section 32 arranged between the engagement section 30 and the input section 34 and coupled pivotably to the base structure 10, particularly to the opening structure ring 22, for pivoting around the pivoting axis 28 that is transverse or perpendicular to the connection direction 4. The input section 34 is arranged at an angle relative to the engagement section 30 to form an obtuse angle. The input section, 34 the engagement section 30 and the pivoting section 32 are formed in a single part, especially in the form of a rigid, inflexible part.

A user may provide force, e.g. apply a force or pressure to the legs 26 on opposite sides, especially in the input sections 34, in order to provide movement of the legs 26. Each of the legs 26 grips one of the engagement members 14, especially in the engagement sections 30, for substantially synchronous movement of both engagement members 14 and to bend the engagement members 14.

Each of the legs 26 is clipped to the base structure 10, especially to the opening structure ring 22 by means of a clip connection. In this case, two clip connections, each on one side and/or on a different position along the respective pivoting axis 28, are provided. The clip connection may provide a hinge for the respective leg 26 to pivot. For the clip connection, the base structure 10 provides a shaft 11 and the respective leg 26 provides sectionally circumferential grip 21 configured to grip around the shaft 11 and forming a receptacle for the shaft 11.

The opening structure ring 22 surrounds the probe channel 12 and/or substantially is in parallel to the probe channel 12. The ring 22 particularly has an aperture 24 for receiving the base structure 10. The aperture 24 forms a circumferential contact area 36 with the base structure 10, the contact area 36 surrounding the probe channel 12; this contact area 36 having a tight fit or pressure fit substantially provides a centering and a fixation between ring 22 and base structure 10. The aperture 24 furthermore forms an axial contact area (not visible) with the base structure 10 surrounding the probe channel 12 and substantially providing an axial stop of the ring 22 on the base structure 10. The contact areas 36 provide a transmission of force in axial and radial directions as well as the secure attachment between ring 22 and base structure 10.

The base structure 10 is made of the polymer compound polyoxymethylene, short for POM. The opening structure 20 comprises a different polymer compound, which has for example a higher elongation at break or ductility relative to the other polymer compound.

Each of the engagement members 14 has a sliding surface 16 configured for sliding on the hose barb 100 to deflect the respective engagement member 14 in the radial direction 6, and a retention surface 18 facing the probe channel 12. The sliding surface 16 comprises a substantially concave and sectionally circumferential form corresponding to the circumferential protrusion 102. The retention surface 18 is provided to stop behind the circumferential protrusion 102.

The legs 26, particularly in the respective engagement section 30, comprise a hook configured to grip/grab around a front end 15 of the respective engagement member 14, the front end 15 comprising a section of the sliding surface 16. Each leg 26 has in the engagement section 30 a first axially extending division 30.1, a radially extending division 30.2, and a second axially extending 30.3 division formed from one piece/monolithically, and particularly substantially establishing a U-shaped form in a cross-section. The second axially extending division 30.3 forms a tip and extends towards the pivoting section 32 and the input section 34 and particularly extends along the first axially extending division 30.1.

Fig. 2 shows a probe connector 2 quite similar to that of Fig. 1.

In Fig. 2, the probe connector 2 is connected to a hose barb 100 and can guide a probe through a probe channel 12 in the probe connector 2 into the hose barb 100 and thereby into a bioreactor container. As a difference to Fig. 1, between the hose barb 100 and the probe connector there is a gasket 8. The gasket 8 seals in the transition between the probe channel 12 and the hose barb 100. The gasket 8 comprises a ring-shape.

The probe connector 2 of Fig. 2 has an opening structure ring 22 attached to a base structure 10 via its aperture 24. The opening structure ring 22 is in contact with the base structure 10 via a circumferential contact area 36, an axial contact area 38, and a conical/tapered and/or inclined contact area 40. The circumferential contact area 36 is substantially cylindrical and provides a centering of the ring 22 relative to the base structure 10 as well as a fixation therebetween. The axial contact area 38 is substantially flat and/or ring-shaped and provides an axial stop between ring 22 and base structure 10. The tapered and/or inclined contact area 40 provides a centering and an axial stop. Any one of the contact areas 36, 38, 40 may be provided independently.

Fig. 3 shows a probe connector 2 quite similar to that of Fig. 2. As a difference between Fig. 3 and Fig. 2 it is given that in Fig. 3 there is no opening structure ring 22 attached to a base structure 10. In Fig. 3, an opening structure 20 is coupled directly to the base structure 10.

In detail, with respect to Fig. 3, the probe connector 2 has the opening structure 20 comprising two legs 26 each configured to be moved by a user and engaging with one of two engagement members 14 for bending thereof in a radial direction. The legs 26 are pivotably coupled to the base structure 10, namely directly to the base structure 10. A pivoting section 32 of each of the two legs 26 is coupled pivotably directly to the base structure 10.

Any one of the above described probe connectors 2 can be used to conduct a method for connecting and/or disconnecting the probe connector 2 to a hose barb, especially to the correspondingly shown hose barb 100. The method may include moving the legs 26 in radial directions 6 in an engagement section 30 thereof, wherein the engagement members 14 are bent in the radial directions 6, and moving the probe connector 2 towards or away from the hose barb 100 especially while the engagement members 14 are bent.

For example and with reference to any one of Figs. 1 to 3, the two legs 26 may be pushed on their input sections 34 towards each other, e.g. in a or in parallel to the radial direction 6. Thus, the legs 26 act in the sense of a tool like pliers wherein the engagement sections 30 thereby move away from each other and pull apart or bend the engagement members 14. Thus, the engagement members 14 cannot grip the hose barb 100 and thereby either disconnection with the hose barb 100 as shown and/or connection with another hose barb (not shown) is made easier.

The opening structure 20 may be provided separately from the base structure 10, e.g. including the opening structure ring 22. The opening structure 20 may be attached as a retrofit to other probe connectors as known in prior art.

Fig. 4 relates to a connection system 200 including a bioreactor container 110 with a hose barb 100, and including a probe connector 2 like that of Figs. 1, 2 or 3.

Shown and described is a use of a probe connector 2 for connecting and/or disconnecting to a bioreactor container 110 which has a hose barb 100 and particularly for guiding a probe into the bioreactor container 110 for temperature measurement. It is provided that when the probe connector 2 is connected to a hose barb 100, a measurement probe may be guided into the bioreactor container 110.

### Reference signs list

- 2: probe connector
- 4: connection direction
- 6: radial direction
- 8: gasket

- 10: base structure
- 11: grip
- 12: probe channel
- 14: engagement member
- 15: front end
- 16: sliding surface
- 18: retention surface

- 20: opening structure
- 21: shaft
- 22: opening structure ring
- 24: aperture
- 26: leg
- 28: pivoting axis
- 30: engagement section
- 30.1: division
- 30.2: division
- 30.3: division
- 32: pivoting section
- 34: input section
- 36: contact area
- 38: contact area
- 40: contact area

- 100: hose barb
- 102: protrusion
- 104: channel
- 200: system

## Claims

1. Probe connector (2) connectable to a hose barb (100) of a bioreactor container (110) for guiding a probe through the probe connector (2) and the hose barb (100) into the bioreactor container (110), including
a base structure (10) having a probe channel (12) and at least one engagement member (14) configured to grip the hose barb (100),
an opening structure (20) comprising at least one leg (26) configured to be moved by a user and engaging with the at least one engagement member (14) for bending thereof in a radial direction (6).

2. Probe connector (2) according to claim 1, wherein the at least one leg (26) is pivotably coupled to the base structure (10), especially to an opening structure ring (22) attached to the base structure (10), particularly the opening structure ring (22) surrounding the probe channel (12).

3. Probe connector (2) according to according to any one of the preceding claims, wherein the at least one leg (26) has
an engagement section (30) configured to grab the engagement member (14),
an input section (34) arranged away from the engagement section (30) to be pushed be a user, and
a pivoting section (32) arranged between the engagement section (30) and the input section (34) and coupled pivotably to the base structure (10) and/or to the opening structure ring (22).

4. Probe connector (2) according to according to any one of the preceding claims, wherein the at least one leg (26) is coupled pivotably to the base structure (10) and/or the opening structure ring (22) for pivoting around a pivoting axis (28) that is transverse or perpendicular to a connection direction (4) of the probe connector (2).

5. Probe connector (2) according to according to any one of the preceding claims, wherein the at least one leg (26) is configured to be clipped to the base structure (10) and/or the opening structure ring (22) by means of a clip connection, especially two clip connections.

6. Probe connector (2) according to according to any one of the preceding claims, wherein the opening structure ring (22) has an aperture (24) forming a circumferential contact area (36) and an axial contact area (38) with the base structure (10).

7. Probe connector (2) according to the preceding claim, wherein the base structure (10) comprises a polymer compound, especially polyoxymethylene POM, and wherein the opening structure (20) comprises a polymer compound.

8. Probe connector (2) according to the preceding claim, wherein the at least one engagement member (14) has
a sliding surface (16) configured for sliding on the hose barb (100) to deflect the at least one engagement member (14) in the radial direction (6), and
a retention surface (18) facing the probe channel (12) configured to stop behind an at least sectionally circumferential protrusion (102) of the hose barb (100).

9. Probe connector (2) according to according to any one of the preceding claims, wherein the at least one leg (26), particularly the engagement section (30), comprises a hook configured to grab around a front end (15) of the at least one engagement member (14), optionally the front end (15) comprising a section of the sliding surface (16).

10. Probe connector (2) according to any one of the preceding claims, wherein the base structure (10) has two of the at least one engagement member (14) and the opening structure has two of the at least one leg (26), each of the two legs (26) engaging with one of the two engagement members (14).

11. Probe connector (2) according to the preceding claim, wherein the two legs (26) and the two engagement members (14) are arranged on opposite radial sides of the probe channel (12).

12. Use of the probe connector (2) according to any one of the preceding claims for connecting and/or disconnecting to a bioreactor container (110) with a hose barb (100) and particularly for guiding a probe into the bioreactor container (110) for temperature measurement.

13. Opening structure (20) for a probe connector (2) connectable to a hose barb (100) of a bioreactor container (110) for guiding a probe through the probe connector (2) and the hose barb (100) into the bioreactor container (110), the probe connector (2) including a base structure (10) having a probe channel (12) and at least one engagement member (14) configured to grip the hose barb (100),
the opening structure (20) comprising at least one leg (26) configured to be moved by a user and engaging with the at least one engagement member (14) for bending thereof in a radial direction (6).

14. Connection system (200) including a hose barb (100), optionally a bioreactor container (110) with the hose barb (100), and the probe connector (2) according to any one of claims 1 to 12.

15. Method for connecting and/or disconnecting the probe connector (2) according to any one of claims 1 to 12 to a hose barb (100), including
moving the at least one leg (26) in the radial direction (6) at least in an engagement section (30) thereof, wherein the at least one engagement member (14) is bent in the radial direction (6), and
moving the probe connector (2) towards or away from the hose barb (100).
